Europäisches Patentamt

(19) European Patent Office

Office européen des brevets

(11) Publication number : **0 486 262 A1**

(12) **EUROPEAN PATENT APPLICATION**

(21) Application number : **91310429.5**

(22) Date of filing : **12.11.91**

(51) Int. Cl.⁵ : **C08F 2/00**

(30) Priority : **13.11.90 GB 9024629**
**21.11.90 GB 9025364**

(43) Date of publication of application :
**20.05.92 Bulletin 92/21**

(84) Designated Contracting States :
**AT BE CH DE DK ES FR GB GR IT LI NL SE**

(71) Applicant : **VINAMUL LTD.**
**Mill Lane**
**Carshalton, Surrey SM5 2JU (GB)**

(72) Inventor : **Baily, William Peter James**
**54 Honister Heights**
**Purley, Surrey, CR8 1EU (GB)**
Inventor : **Peters, David Colin, "Danehey"**
**37 Barnston Road, Heswall**
**Wirral, Merseyside L94SB (GB)**
Inventor : **Ulyatt, Jeffrey Martin**
**127 Mid Street**
**South Nutfield, Surrey RH1 5RP (GB)**

(74) Representative : **Roscoe, Brian Corrie et al**
**UNILEVER PLC Patents Division P.O. Box 68**
**Unilever House**
**London EC4P 4BQ (GB)**

(54) **Chemical processes.**

㊗ Emulsion copolymers are prepared in a process which includes a control procedure. The energy balance is integrated over a time and compared with a predetermined value. The reactant feeds or reaction temperature can then be adjusted.

EP 0 486 262 A1

Jouve, 18, rue Saint-Denis, 75001 PARIS

FIELD OF THE INVENTION:

This invention relates to polymerisation processes in which monomer streams are introduced into a reaction vessel to form a desired polymer product. Usually, but not exclusively, the process will be an emulsion polymerisation procedure.

BACKGROUND TO THE INVENTION:

Polymerisation processes involve complex reactions utilising at least one monomer stream, which provides a homopolymer, or a number of streams which provide a resultant copolymer. Additionally, there will be reaction media, for example an aqueous medium containing surfactants, and other reaction additives such as catalysts, polymerisation initiators and stabilising materials. The monomer feeds can be liquids or solids, in which case they are introduced in reaction vessel in the form of solutions, or gaseous, in which case the monomer fills the upper space of the reactor and also dissolves in the reaction medium. All the monomers may be present at the start of the reaction or, as is more common in polymerisation procedures, they are added during the reaction at various rates.

Commercially operated polymerisations are usually run by instructing the operator to follow a specified time and temperature profile coupled with similar profiles for addition of reagents either in discrete amounts or steadily with constant or changing rates. The operator is provided with little or no information on the actual course of the polymerisation. Particularly where functional monomers or monomers of disparate reactivity are used, variations in reaction rate may lead to undesirable variations in relative monomer concentrations which produce a polymer composition differing significantly from that which was intended.

Attempts have been made to improve this technique by sampling at intervals to follow the course of polymerisation. However, subsequent analytical procedures take a finite time and give a result which relates to the condition of the batch at the time of sampling i.e. some time before the result is available. Sampling of large reactors especially those operating under high pressures is a procedure fraught with problems and may not always be possible.

One approach which may improve on this technique is that of arranging to run the reaction by controlling the amount of initiator added such that the heat of polymerisation just equals the heat removal capability of the reactor. This may give improved control of polymerisation when the cooling system of the reactor can be relied upon always to give the same heat removal capability. However, the cooling surfaces may become fouled and for safety reasons it is unwise to allow the full cooling capacity to be used as routine. The technique may not be be applicable to make all desired polymers especially where controlled polymer structure is needed. It also has the disadvantage of providing no information about the so-called induction period when the polymerisation rate is increasing in the early part of the reaction, since the heat output of the system does not reach the cooling capacity of the reactor during this period.

Literature

Process control of polymerisation reactions is described in EPA 0 111 341 (Sumitomo), EPA 0 165 416 (Mitsubishi) and Japanese Patent Publication 13047/60.

GENERAL DESCRIPTION OF THE INVENTION

This process comprises reacting a set of monomers in a reaction vessel wherein,
(i) the total energy balance in the reactor during the polymerisation is integrated over a specific sample time to give the total heat generated due to reaction,
(ii) the extent of polymerisation that has taken place is determined by the comparison of the heat generated up to the sample time with a predetermined calibration of the extent of polymerisation against heat generation, and
(iii) the feeds of the reactants, or the reaction temperature, are adjusted to move the identified extent of polymerisation towards the required condition according to a model which represents the agreed best course, i.e. required, for the reaction.

The set of monomers may include only one monomeric species, so that a homopolymer is obtained, or several monomers to provide a copolymer, eg. a terpolymer.

The heat generated since the initiation point of the polymerisation is obtained by performing a total energy balance on the system. The total energy balance is performed in two parts, one directed to the reactor and the other to the cooling system. The cooling system can be, for example, an internal surface, eg. a coil, a jacket, an external heat exchanger, a reflux condenser or a combination of these. Cooling fluid, usually water, will be passed through the system to remove heat.

An energy balance directed to the reactor contents gives:-

```
( Accumulation  )        ( Heat in  )        ( Heat out       )
( in Reagents   )   =    ( with     )   +    ( with           )   +
( and Equipment )        ( Reagents )        ( products or    )
                                             ( by products    )


          ( Heat      )        ( Heat out )        ( Heat in    )
          ( of        )   +    ( in       )   +    ( with       )
          ( Reaction  )        ( Cooling  )        ( Agitation  )
                               ( System   )
```

$$\frac{d}{dt}(Wr\ Cp\ Tr) = \sum_i F_{i,in}.C_{pi}(T_{i,in} - T_o) - \sum_j F_{j,out}.C_{pj}(T_r - T_{jout})$$

$$+\quad Qr - Qhe + Qm \qquad \dots\dots\dots Equ\ (1)$$

where $T_{i,in}$ is the temperature of the $i^{th}$ inlet stream.

$T_{j,out}$ is the temperature of the $J^{th}$ outlet stream.

Tr, $T_o$ is the reactor and $T_o$ is the initial reference temperature usually ambient.

$$Wr\ C_p = \sum_k W_k\ C_{pk}$$ is the mass of material in the reactor times the heat capacity including equivalent mass of metal.

$$F_{i,in}.C_{pi} = \sum_k F_{k'i,in}C_{pk}$$ is the mass flow of the $i^{th}$ inlet stream times its heat capacity, this $i^{th}$ stream having k components.

In the case of batch reaction, this term is zero.

$$F_{j,out}.C_{pj} = \sum_m F_m \text{ jout } C_{pm}$$

is the mass flow of the $j^{th}$ outlet stream times its heat capacity, the $j^{th}$ stream having m components.

In the case of a continuous stirred tank reactor one of the $j^{th}$ streams will be the product stream.

In the case of a completely closed semi continuous reaction all the above terms will be zero unless the head space is vented during the process.

$$Qr = \sum_n R_n \Delta H_n V_r$$

is the rate of energy due to n reactions occurring in the reactor.

Qhe = U A (Tr - The)    is the rate of energy transfer through the exchanger wall, with U being the overall heat transfer coefficients, A is the available surface area for heat transfer and The is the average exchanger temperature.

Qm    is the rate of heat input due to mechanical work of the agitators, this can be considerable for very viscous products or for products that go through a gel or viscous phase.

An energy balance directed to the heating and cooling system, gives:-

```
( Accumulation )       ( Heat in   )       ( Heat in      )
( in Cooling   )   =   ( from      )   +   ( with         )   +
( System       )       ( emulsion  )       ( inlet water  )

                       ( Heat out     )       ( Heat loss    )
                       ( with         )   +   ( to           )
                       ( outlet water )       ( environment  )
```

$$\frac{dTcs}{dt} (\rho_w Cp_w W_1) = UA (Tr - Tcs) + Fw \, C_{pw} (Tcwi-Tcwo) + Qe \quad \ldots\ldots\ldots \text{Equ (2)}$$

Where $T_{cs}$ is average temperature of cooling system, Tcwi and Tcwo are inlet and outlet temperature to the cooling system respectively. Fw is mass flow of water to the cooling system.

$W_1$ is mass of water.

It is possible by integrating equations 1 and 2 over predescribed intervals to calculate the accumulated heat of reaction over that period. This can then be related to the calibration curve to give the extent of conversion.

The calibration which relates to the extent of polymerisation can be established by practical techniques and/or theoretical calculations. The reactor may be sampled during a trial run and the polymerisation measured. Alternatively, the heat evolution related to each monomer during polymerisation is known as well as the reactivity ratios. This enables the heat evolution related to conversion to be calculated. In practice, a combination of techniques will be used allowing an accurate calibration to be derived.

In addition to the calibration of heat evolution against extent of polymerisation, a model is also required of the way in which the reaction should proceed. This model again can be derived practically and/or theoretically. In practical terms the model can be derived from the average of a number of polymerisations in which the product has been found to conform particularly well with the properties required. Alternatively it can be calculated from a knowledge of the kinetics of the polymerisation.

Finally, it is necessary to programme the control system to respond to the deviations it detects between the actual extent of polymerisation at the sample time and the state identified as desirable in the model. It may be that in different polymerisations different correction procedures may be required. These can include variations in the rate of feed of any of the ingredients or an alteration in temperature of the reactor. It is an important feature of the control process that the control of the polymerisation is divorced from a strict relationship with consecutive steps as is frequently the case with conventional control systems. In the new central system the steps may be marked not by time intervals but by the reaction reaching a designated extent of reaction.

The process control procedure of the invention is adapted to be applied to a batch polymerisation process; a process of this type is exemplified. The present process control is specifically applicable to a polymerisation process which includes a first, induction, phase in which a seed polymer emulsion is formed. This seed polymer may have the same composition as the desired end product or be different. The end of the induction period could be identified by either a sharp reduction in heat evolution, when the amount of monomer present initially is small, or the heat output showing a rapid increase if the amount of monomer present initially is large.

An additional benefit arising from the use of computer controlled processing is that the programme may allow the energy balance integration to be projected forward a time interval and compared with the predetermined calibration at that time interval ahead. This is of particular value in ensuring safe procedures are incorporated in polymerisation processes. There is usually an intention to operate near the maximum cooling rate, say 90%, to obtain efficient, i.e. time effective, production.

The process control of the present invention compensates for changes in the heat transfer characteristics of the apparatus occurring during polymerisation. Thus such changes, for example caused by viscosity changes or polymer deposition on heat exchange surfaces, will disturb the heat transfer capabilities. This could lead to heat output greater than the rate at which heat can be removed, but the programme will compensate to reduce the polymerisation rate.

With the new control process, the extent of polymerisation is always known so that a build up of unreacted monomer cannot occur. This greatly increases the safety of the process, because the process is now under much greater control it can be possible to utilise much more of the heat removal capacity of the equipment giving shorter cycle times.

The emulsion copolymers of the invention will have a major proportion of vinyl monomers in the feedstock.

## SPECIFIC DESCRIPTION OF THE INVENTION:

The process of the invention will now be described by way of example with reference to the accompanying diagrammatic drawing which displays the reaction vessel and the processing units.

A reaction vessel 1, with agitator 10, can be optionally pressurised and may include an external cooling coil 2 or an internal coil 3 on recirculation cooling system of a pump 4 and an external heat exchanger 5. The reactor 1 may be equipped with a reflux condenser 6. The cooling coils and external heat exchanger can be used to heat the reactor and its contents. Preferably the vessel will have a suitable insulation jacket. Temperature and flow sensors and transmitters are positioned to provide flow and temperature data and pass this information to a control processing unit. Inlets 7, 8 & 9 are for the feedstocks, ie. monomers, initiators and water phases while outlet 11 is for the product emulsion.

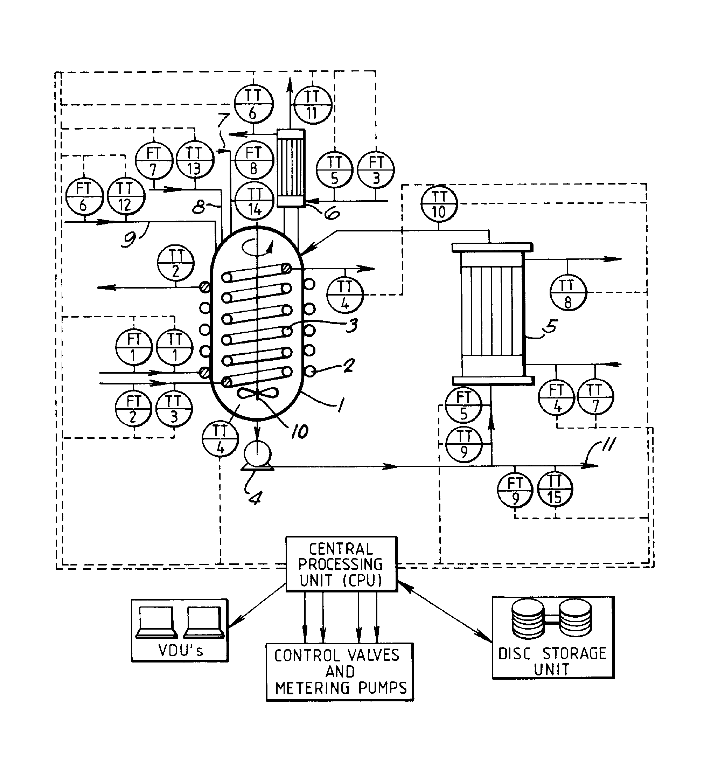

The sensors and transmitters shown in the figure are:-

i) FT1, TT1, TT2 - external cooling coil flow and inlet/outlet cooling water temperatures.

ii) FT2, TT3, TT4 - internal coil flow and inlet/outlet cooling water temperature.

iii) FT3, TT5, TT6, reflux condenser flow and inlet/outlet cooling water temperature.

iv) FT4, TT7, TT8, external recirculation heat exchanger and inlet/outlet cooling water temperature.

v) FT6 to FT8, TT12 to T14 are inlet flows and temperatures of monomers, initiators, water phases etc.

vi) FT9 and TT15 are the product flow rate and temperature.

vii) FT5, TT9 and TT10 are the emulsion recirculating flow rate, inlet and outlet temperatures from the external heat exchanger.

The output signals from these sensors are transmitted via multicore cables and convertors to a central processing unit. These signals are transmitted every second. The energy balance is integrated every fifteen seconds and changed on the VDU's every five minutes. The heat evolved and hence conversion is changed on the VDU's and printed out every five minutes. These periods will be selected to accord with the type of polymerisation and the equipment used.

The effect of increasing or decreasing the supply of monomers allows the level of free monomer or initiator or other component in the vessel to be controlled. The total amount of monomer fed at any instant is measurable either by summing the total signal as supplied to the conduit pumps or by appropriate pressure load cells associated with the monomer storage vessels. The benefits associated with the use of a process control system according to the invention are:-

i) More consistent products are obtained by elimination of variable polymerisation rates.

ii) The concentration of monomers in the reaction vessel are controlled so that the distribution of functional monomers used in relatively small amounts can be related to the rate at which they are being consumed in the reaction, the polymers of high molecular weight can be prepared consistently by having a high but controlled content of free monomer in the reaction medium and a build up of large concentrations of highly reactive monomers eg. vinyl chloride, can be prevented. The presence of a relatively high concentration of a reactive monomer can lead to blocks of these polymers being formed in the copolymer.

In a conventional polymerisation in which the addition of materials is controlled by elapsed time then at any time the extent of polymerisation will not be precisely known. If the functional monomer reacts more rapidly than the bulk monomers and the polymerisation is running slowly then the functional monomer will tend to be unevenly distributed in that it will be concentrated in the first formed polymer and will not be present in the polymer made at the end of the process. Alternatively, if the polymerisation is proceeding more rapidly than average then the functional monomer will be concentrated relatively in the last formed polymer.

Thus, it may be seen that the use of an elapsed time control system with raw materials of variable polymerisation rate will give rise to a series of products in which the functional monomers are variably distributed.

In the new control system, the extent of polymerisation is known and so by simple extension is the content of unpolymerised monomer in the reactor. The level of unpolymerised monomer can indeed be controlled by the control programme. This then provides a control regime in which the functional monomer additions can be closely related to the progress of the polymerisation and accurately placed in whatever part of the polymer is felt to give the greatest benefit. The problems caused by the variable rate of polymerisation are eliminated.

Example 1

In many polymerisations the monomers utilised contain, in addition to the major materials that comprise more than 90% of the total monomer charge, one or more special monomers which although present in small quantities have a profound influence on the performance of the polymer. These special monomers frequently possess, in addition to a polymerisable linkage, another functional group and are often referred to as functional monomers.

It is well known that the distribution of the functional monomers within the final polymer affects the performance of the polymer and so it is desirable to control the distribution if possible. A major difficulty occurs when, as is usually the case, all the monomers in a specific polymerisation have widely different rates of incorporation into the polymer. To partly overcome these problems it is a frequently used procedure to slowly add the functional materials over the time period in which the polymerisation should be taking place. This is hoped to give an even distribution. Because of the difficulty encountered in normal commercial polymerisation uneven distributions of functional monomer are only rarely attempted.

Example 2

In some copolymers problems arise if the wrong sequence of monomers are found together in the polymer chain. In copolymers which contain vinyl chloride then it is desirable to avoid the condition where the vinyl chloride units are together in blocks. Vinyl chloride blocks in copolymers will tend to dehydrochlorinate under certain conditions and produce undesirable coloured polymers. Vinylidene dichloride will behave in the same way but, in addition, blocks of vinylidene dichloride cause the polymer to be considerably stiffer than a random copolymer.

The most easy method of ensuring that one particular monomer does not form an unreasonable quantity of blocks in a copolymer is to make sure that the monomer supply from which the polymer is prepared contains the correct proportion of all the monomers that are to be present in the copolymer. The concentration of the monomer which represents a problem when present in blocks must not be allowed to rise. In determining the proper proportions of the monomers the reactivity of the monomers with each other must be considered.

In a polymerisation process which is controlled using elapsed time and where there is variability in the rate of the reaction it is not possible to accurately know the size or composition of the monomer pool from which the polymer is being produced.

In spite of this, efforts are frequently made to avoid the conditions where blocks of undesirable monomer are built up. These efforts usually comprise slowly adding the problem monomer during the polymerisation or by feeding the problem monomer with an excess of other monomers during the polymerisation. In a series of polymerisations in which the extent of polymerisation varies with time, then the size and composition of the unreacted monomer pool in the reactor will change. This will lead to variations in the blockiness of the difficult monomer.

With the new control system, the extent of polymerisation is always known and so therefore is the quantity of unreacted monomer in the reactor. A calculation based upon the reactivity of the monomers used in the polymerisation will enable the composition of the unreacted monomer pool to be deduced. The control system therefore provides a means of controlling both the composition and size of the unreacted monomer pool in the reactor. This ability can easily be manipulated to optimise the polymerisation conditions so that the formation of unwanted monomer sequences is avoided.

Example 3

In the preparation of copolymers it is desirable to control very many factors during the polymerisation. In previous examples the desire to control the distribution of functional monomers and the sequence distribution of monomers were discussed. It is also desirable to control the polymer molecular weight. In very many applications it is desired to get a very high molecular weight and in reactions where one or more of the monomers has significant chain transfer activity this can be a problem.

In a free radical initiated polyaddition polymerisation the molecular weight depends upon the concentration of monomer present at the locus of polymerisation. It also depends upon the rate of generation of free radicals.

At first sight, it would appear that in order to get the highest molecular weight polymer it is desirable to get all the monomers in the reactor at the start of the process. This cannot be done if a particular distribution of the monomers in the final copolymer is required. The different reactivity of the monomers demands that they are added in a way which takes account of their reactivity. The most desired reaction conditions would be those in which the unpolymerised monomer pool in the reactor is kept at a high enough level to be consistent with the production of a polymer of the desired molecular weight. The unreacted monomer pool must not, however, be large enough to cause problems of the distribution of the monomers in the polymer as it is used up at the end of the reaction.

In a polymerisation process controlled by the addition of materials against an elapsed time regime it is very difficult to control the polymerisation conditions if the polymerisation rate is variable. If the polymerisation is rapid the unreacted monomer pool is used up faster than it is replenished and the copolymer produced has a low molecular weight. If the polymerisation is sluggish the unreacted monomer pool builds up and the control over the composition of the copolymer is lost.

The new process control provides continuous information with regard to the extent of polymerisation and the quantity of unreacted monomer in the reactor. The quantity of unreacted monomer can be controlled by alteration of the monomer feed rates thus giving a very good control over the molecular weight of the copolymer being produced and its composition.

Example 4

The polymerisation of many monomers which polymerise by a free radical induced polyaddition process is highly exothermic. The process is so exothermic that it is not possible to design reactors that can deal with the heat evolution unless that heat evolution can be controlled to take place over a period of several hours.

Unfortunately, the polymerisation is often a process in which the rate is very susceptible to minor contaminants in the system, as has been previously explained. There is a constant danger that in a sluggish polymerisation the unreacted monomer concentration could build up in the reactor to such a level that if it were suddenly to start polymerising rapidly, it could outstrip the cooling capacity of the reactor. The process has then become uncontrollable.

It is clearly desirable to avoid this type of incident and it is usual to keep in hand a great deal of potential cooling capacity so that if a build up of unreacted monomer occurs it can still be controlled. This is an inefficient method of using the reactor as it lengthens cycle times.

**Claims**

1. This process comprises reacting a set of monomers in a reaction vessel wherein,

(i) the total energy balance in the reactor during the polymerisation is integrated over a specific sample time to give the total heat generated due to reaction,

(ii) the extent of polymerisation that has taken place is determined by the comparison of the heat generated up to the sample time with a predetermined calibration of the extent of polymerisation against heat generation, and

(iii) the feeds of the reactants, or the reaction temperature, are adjusted to move the identified extent of polymerisation towards the required condition according to a model which represents the required course for the reaction.

European Patent
Office

**EUROPEAN SEARCH REPORT**

Application Number

EP    91 31 0429

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,A | EP-A-0 111 341 (SUMITOMO)<br>--- | | C08F2/00 |
| D,A | EP-A-0 165 416 (MITSUBISHI RAYON CO.)<br>--- | | |
| A | FR-A-1 211 853 (HULS)<br><br>----- | | |
| | | | **TECHNICAL FIELDS SEARCHED (Int. Cl.5 )** |
| | | | C08F |

The present search report has been drawn up for all claims

| Place of search | Date of completion of the search | Examiner |
|---|---|---|
| THE HAGUE | 22 JANUARY 1992 | CAUWENBERG C. L. |

EPO FORM 1503 03.82 (P0401)